Europäisches Patentamt

European Patent Office

Office européen des brevets

(11) Veröffentlichungsnummer: **0 306 746 B1**

# EUROPÄISCHE PATENTSCHRIFT

(45) Veröffentlichungstag der Patentschrift: **21.11.91**

(51) Int. Cl.⁵: **H01M 2/04**, H01M 2/12

(21) Anmeldenummer: **88113476.1**

(22) Anmeldetag: **19.08.88**

(54) **Akkumulatorenbatterie.**

(30) Priorität: **03.09.87 DE 3729523**

(43) Veröffentlichungstag der Anmeldung:
**15.03.89 Patentblatt 89/11**

(45) Bekanntmachung des Hinweises auf die
Patenterteilung:
**21.11.91 Patentblatt 91/47**

(84) Benannte Vertragsstaaten:
**AT BE DE ES FR GB IT NL SE**

(56) Entgegenhaltungen:
**DE-A- 3 544 003**
**GB-A- 1 548 129**

(73) Patentinhaber: **VARTA Batterie Aktiengesellschaft**
**Am Leineufer 51**
**W-3000 Hannover 21(DE)**

(72) Erfinder: **Streuer, Peter**
**Winsener Strasse 32**
**W-3000 Hannover 61(DE)**

(74) Vertreter: **Kaiser, Dieter Ralf, Dipl.-Ing.**
**Gundelhardtstrasse 72**
**W-6233 Kelkheim/Ts.(DE)**

## Beschreibung

Die Erfindung betrifft eine Akkumulatorenbatterie, insbesondere Kraftfahrzeugbatterie, deren Blockdeckel eine sich über alle Zellen erstreckenden haubenförmig erhöhten Teil besitzt, in welchem Einfüllöffnungen angeordnet sind, während die Polanschlüsse an gegenüberliegenden Enden eines abgesetzten Blockdeckelteils liegen.

Eine Batterie mit einer derartigen Deckelkonstruktion ist beispielsweise aus der GB-PS 1 548 129 bekannt. Sie hat sich insbesondere bei solchen mehrzelligen Akkumulatoren als sehr zweckmäßig erwiesen, die eine zentrale Entgasungseinrichtung besitzen. In diesem Fall gelangen die beim Laden entstehenden Gase nicht durch Belüftungsöffnungen in den Verschlußstöpseln ins Freie, sondern werden durch einen unterhalb des Deckels verlaufenden Kanal, mit dem alle Gasräume der Zellen kommunizieren, nach außen geführt. Die zentrale Öffnung dieses Kanals befindet sich meist an einer der Schmalseiten der Batterie. Häufig ist sie ausgeweitet oder mit einem Rohransatz versehen, so daß durch Aufschieben eines Schlauches die mit Säurenebeln beladenen Akkumulatorgase von korrosionsempfindlichen Teilen weiter entfernt in Freiheit gesetzt werden können.

Durch die Einführung eines zentralen Entgasungssystems, bei dem ein Kanal alle Einfüllöffnungen verbindet und entweder in Reihe mit diesen oder parallel zu denselben verläuft, wurden Deckelformen er eingangs genannten Art mit einem haubenförmig erhöhten Teil im Bereich der Einfüllöffnungen entwickelt, weil dem zusätzlichen Raumbedarf der Entgasungseinrichtung Rechnung getragen werden mußte und es sich in vielen Fällen als sehr vorteilhaft erwies, das Kanalsystem für die zentrale Entgasung in diesen Teil des Deckels durch Anspritzen entsprechender Wände oder Führungsleisten an die Deckelunterseite zu integrieren.

Während durch diese bekannte Ausbildung des Batteriedeckels, nachdem die Einfüllöffnungen noch mit dichtschließenden Verschlußstöpseln versehen worden sind, Beschädigungen am Fahrzeug infolge austretender Elektrolytteilchen wirksam verhindert werden, sind die an gegenüberliegenden abgesetzten Teilen des Deckels angeordneten Polanschlüsse gegen Verschmutzung durch Säure, die bei unachtsamem Füllen von den höher gelegenen Einfüllöffnungen leicht zu diesen hinfließen kann, nicht geschützt. Da ferner der erhöhte Teil des Batteriedeckels sich mit dem überwiegenden Teil des Deckelumrisses deckt und eine zusammenhängende Fläche zur vorübergehenden Ablage von Gegenständen, z.B. Werkzeugen, anbietet, besteht für die freiliegenden, etwa gleichhohen Polköpfe die Gefahr, daß sie zur Unterstützung der abgelegten Gegenstände mit herangezogen werden, wobei sich Kurzschlüsse ergeben können.

Aus der DE-A-3544003 ist eine Batterie mit einer Abdeckfolie bekannt, die den gesamten ebenen Zelldeckel bedeckt, wobei die Folie ausreichend dick sein kann, um Filmscharniere als Poladeckungen zu bilden.

Der Erfindung liegt daher die Aufgabe zugrunde, die Verdeckelung einer Batterie nach dem eingangs genannten Gattungsbegriff so zu gestalten, daß die Deckeloberseite von einer glatten, gut zu reinigenden und über den gesamten Batterieumriß ausgedehnten Oberfläche gebildet ist, daß sie sämtliche herausragenden Teile überdeckt und gleichzeitig eine Isolation gegen unbeabsichtigtes Berühren gewährleistet.

Die Aufgabe wird erfindungsgemäß mit den im kennzeichnenden Teil von Anspruch 1 angegebenen Mitteln gelöst.

Anhand zweier Figurendarstellungen werden Einzelheiten, Merkmale und Vorteile der Erfindung verdeutlicht.

Figur 1 zeigt eine 6-zellige Bleibatterie (12V, 36 Ah) gemäß Neuerung
Figur 2 zeigt die Arretierung der erfindungsgemäßen Abdeckplatte am Blockkastendeckel im Detail (eingekreister Ausschnitt in der Figur 1).

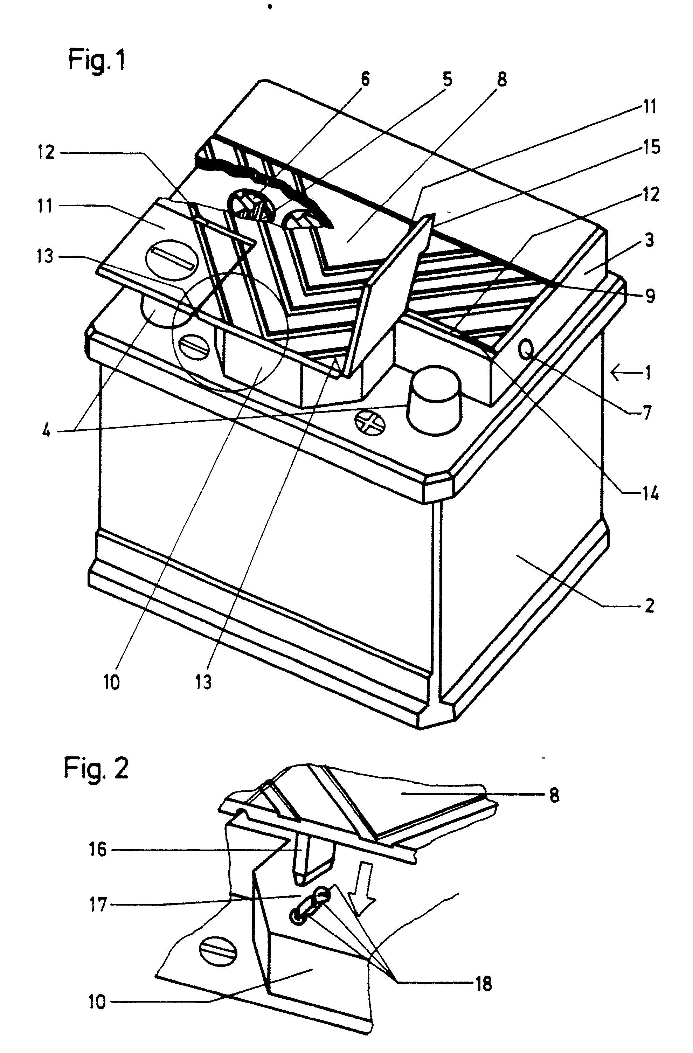

Auf den Blockkasten 2 der Bleibatterie 1 in Figur 1 ist ein Blockdeckel 3 nach üblichen Verfahren (z.B. Spiegelschweißen) aufgeschweißt. Das Gehäusematerial besteht vorzugsweise aus Polypropylen.

Der Blockdeckel ist bis auf zwei kleinere, einander gegenüberliegende Bereiche, durch welche die Polanschlüsse 4 hindurchgeführt sind, haubenförmig erhöht und weist innerhalb dieses Teils die in einer Sechserreihe angeordneten Einfüllöffnungen 5 auf, von denen zwei durch einen Aufriß der Abdeckplatte sichtbar gemacht sind. Die Verschlußstöpsel 6 der Einfüllöffnungen sind so weit versenkt, daß sie mit der Deckeloberfläche bündig abschließen.

An der rechten Schmalseite des Blockdeckels befindet sich ferner die Austrittsöffnung 7 eines Entgasungskanals.

Die erfindungsgemäße Ausgestaltung der Batterie besteht nun darin, daß eine flache Kunststoffplatte 8 den gesamten vorderen Teil des Blockkastendeckels bis einschließlich der Verschlußstöpsel abdeckt und dabei auch die freiliegenden Pole überdacht. Die Abdeckplatte ist mit ihrer hinteren zugespitzten Kante in eine passende Stoßfuge 9 am hinteren, von der Überdachung ausgenommenen Teil des Blockdeckels eingehakt und vorne an dem erkerartig bis zur vorderen Mitte des Blockkastens vorspringenden erhöhten Blockdeckelabschnitt 10 unverrückbar fixiert. Einzelheiten dieser Befestigung sind in Figur 2 dargestellt.

Die erfindungsgemäße Abdeckplatte ist damit einerseits von dem größeren, sich bis zur Stoßfuge 9 erstreckenden Teil des erhöhten Blockdeckels abgestützt und schließt mit dem hinter der Stoßfuge befindlichen Restteil andererseits bündig ab. Auf diese Weise ergibt sich eine Verdeckelung mit einer dem Batterieumriß angepaßten, absolut ebenen Abdeckfläche, die nicht nur unempfindlich gegen Verschmutzung bzw. leicht sauber zu halten ist, sondern sich auch für dekorative Beschriftungen, Anbringung von Firmenzeichen, Typen-Nummern oder dergl. gut eignet.

Als ein weiterer Vorteil der Erfindung kommt hinzu, daß die lösbar am Blockdeckel befestigte Abdeckplatte nur zum Nachfüllen der Säure und bei allgemeinen Wartungsarbeiten abgenommen werden muß. Dagegen sind die Polanschlüsse durch Hochklappen der diese schützenden vorderen Eckbereiche 11 der Platte gesondert zugänglich. Zu diesem Zweck sind in die Abdeckplatte kurz hinter der Übergangsstufe vom niederen zum höheren Teil des Blockdeckels von beiden Schmalseiten her in Längsrichtung der Batterie Trennschlitze 12 eingearbeitet, wobei die Länge der Schlitze etwa der kleinsten Breite eines der niederen Blockdeckelbereiche entspricht. In senkrechter Richtung zu den Schlitzen, entlang einer Linie, die von den Enden der Schlitze bis zur Vorderkante der Abdeckplatte verläuft, ist die Abdeckplatte auf der Unterseite gekerbt. Infolge der dort geringeren Materialstärke der Platte stellen die Kerben 13 flexible Scharniere dar. Die gegenüberliegenden Enden 11 erhalten dadurch die Funktion von Klappen. Am vorderen Ende eines Schlitzes läuft die Oberseite der Abdeckplatte zu einem schmalen, über den Schlitz vorspringenden Grat 14 aus, welcher ein Gegenstück 15, jedoch mit invers gerichteter Abschrägung, an jeder der Klappen besitzt. In der Schließposition der Klappen überlappen sich die beiden Grate derart, daß der Grat 14 den Grat 15 der Klappe übergreift und die Klappe damit am erhöhten Teil des Blockdeckels, kurz vor der Abstufung zu dem niederen Bereich um die Pole, festhält. Die Klappen lassen sich auf diese Weise stets nur gegen die Kraft einer den Graten innewohnenden Restelastizität, die zum Überwin den der Überlappung aufgewendet werden muß, öffnen und schließen.

Nach Figur 2 ist unter dem vorderen Teil der Abdeckplatte 8, welcher nach der Fertigmontage dem erkerartig vorspringenden Blockdeckelabschnitt 10 aufliegt, eine Nase 16 angespritzt (eine symmetrisch zu dieser angeordnete zweite Nase ist nicht dargestellt). Mit jeder Nase korreliert eine passende Öffnung 17 in dem Deckelabschnitt 10, welche die Nase beim Aufsetzen der Abdeckplatte auf den Blockdeckel aufnimmt. Aus den Seitenwänden der Öffnungen sind gratähnliche Vorsprünge 18 ausgeformt, die eine Reibungskontakt mit den Nasen ausüben und die Abdeckplatte dadurch auch bei starken Erschütterungen der Batterie am Blockdeckel festhalten.

## Patentansprüche

1. Akkumulatorenbatterie, insbesondere Kraftfahrzeugbatterie, deren Blockdeckel einen sich über alle Zellen erstreckenden haubenförmig erhöhten Teil besitzt, in welchem Einfüllöffnungen mit Verschlußstöpseln angeordnet sind, während die Polanschlüsse an gegenüberliegenden Enden eines abgestzten Blockdeckelteils liegen, dadurch gekennzeichnet, daß eine am Blockdeckel (3) lösbar befestigte flache Abdeckplatte (8) aus Kunststoff alle Verschlußstöpsel (5) sowie die Polanschlüsse (4) überdeckt, wobei sie sich auf die vorderen Bereiche des haubenförmig erhöhten Blockdeckelteils abstützt und mit dem hinteren Abschnitt des erhöhten Blockdeckelteils bündig abschließt, und daß die vorderen Enden (11) der Abdeckplatte, welche die Polanschlüsse übergreifen, hochklappbar sind.

2. Akkumulatorenbatterie nach Anspruch 1, dadurch gekennzeichnet, daß die hochklappbaren Enden (11) durch in die Abdeckplatte eingebrachte, zueinander senkrecht verlaufende Trennschlitze (12) und kerbförmige Materialausnehmungen (13), welche die Enden (11) mit dem Rest der Abdeckplatte scharnierartig verbinden, gebildet sind.

3. Akkumulatorenbatterie nach den Ansprüchen 1 und 2, dadurch gekennzeichnet, daß die Abdeckplatte auf dem Blockdeckel mittels einer Stoßfuge (9) am nicht abgedeckten erhöhten Blockdeckelteil, in welche sie mit ihrer zugespitzten Hinterkante einhakt, und mittels Öffnungen (17) im vorderen Bereich des erhöhten Blockdeckelteils, in welche an der Unterseite der Abdeckplatte angespritzte Nasen (16) reibschlüssig eingreifen, fixiert ist.

4. Akkumulatorenbatterie nach den Ansprüchen 1 bis 3, dadurch gekennzeichnet, daß an der Abdeckplatte (8) und ihren aufklappbaren Enden (11) in die Trennschlitze (12) vorspringende Grate (14, 15) vorhanden sind, die sich in der Schließposition der Klappen überschneiden, derart, daß die Klappe von dem übergreifenden Grat (14) der Abdeckplatte am erhöhten Blockdeckelteil festgehalten wird und zum Öffnen nur mit einer die Überlappung aufhebenden Kraft vom Blockdeckel lösbar ist.

## Claims

1. Accumulator battery, in particular motor vehicle battery, whereof the block cover has a part which is raised in the shape of a hood, which extends over all the cells and in which filling openings with closure plugs are arranged, while the pole connections are located at opposite ends of a stepped-down block cover part, characterized in that a flat cover plate (8) of plastics, releasably secured to the block cover (3), covers all the closure plugs (5) and the pole connections (4), being supported on the front regions of the block cover part which is raised in the shape of a hood and ending flush with the rear section of the raised block cover part, and in that the front ends (11) of the cover plate overlapping the pole connections may be folded up.

2. Accumulator battery according to Claim 1, characterized in that the ends (11) which may be folded up are formed by dividing slits (12), which are made in the cover plate and which run perpendicular to one another, and notch-shaped material cutouts (13), which connect the ends (11) to the rest of the cover plate in the manner of a hinge.

3. Accumulator battery according to Claims 1 and 2, characterized in that the cover plate is fixed on the block cover by means of a joint gap (9) on the raised block cover part which is not covered, into which joint gap the cover plate hooks by means of its pointed rear edge, and by means of openings (17) in the front region of the raised block cover part, in which openings (17) lugs (16) moulded onto the underside of the cover plate engage frictionally.

4. Accumulator battery according to Claims 1 to 3, characterized in that there are, on the cover plate (8) and its ends (11) which may be folded up, ridges (14, 15) which project into the dividing slits (12) and which overlie one another in the closed position of the fold flaps in such a way that the fold flap is held firmly by the overlying ridge (14) of the cover plate on the raised block cover part and is releasable from the block cover for opening only with a force overcoming the overlapping.

**Revendications**

1. Batterie d'accumulateurs, en particulier batterie de véhicule automobile, dont le couvercle de bloc possède une partie surélevée en forme de capot s'étendant sur tous les éléments, dans laquelle sont aménagés des orifices de remplissage avec des bouchons de fermeture tandis que les bornes polaires sont situées à des extrémités opposées d'une partie décalée du couvercle de bloc, caractérisée en ce qu'une plaque de recouvrement plane (8) en matière synthétique, fixée amoviblement sur le couvercle de bloc (3), recouvre tous les bouchons de fermeture (5) ainsi que les bornes polaires (4), auquel cas elle prend appui sur les zones avant de la partie surélevée en forme de capot du couvercle de bloc et se termine en affleurement par la portion arrière de la partie surélevée du couvercle de bloc et en ce que les extrémités avant (11) de la plaque de recouvrement, qui passent par-dessus les bornes polaires, sont rabattables vers le haut.

2. Batterie d'accumulateurs selon la revendication 1, caractérisée en ce que les extrémités (11), rabattables vers le haut, sont réalisées par des fentes séparatrices (12) aménagées dans la plaque de recouvrement et s'étendant perpendiculairement l'une à l'autre et par des évidements de matière (13) en forme d'encoche, qui relient les extrémités (11) à la façon de charnières au reste de la plaque de recouvrement.

3. Batterie d'accumualteurs selon les revendications 1 et 2, caractérisée en ce que la plaque de recouvrement est fixée sur le couvercle de bloc au moyen d'un joint de bout (9) sur la partie surélevée non recouverte du couvercle de bloc, dans lequel elle s'accroche par son bord arrière effilé et au moyen d'ouvertures (17) dans la zone avant de la partie surélevée du couvercle de bloc, dans lesquelles des becs (16), rapportés par moulage par injection à la face inférieure de la plaque de recouvrement, pénètrent à contact frottant.

4. Batterie d'accumulateurs selon les revendications 1 à 3, caractérisée en ce que sur la plaque de recouvrement (8) et à ses extrémités (11) rabattables vers le haut existent des arêtes (14,15) faisant saillie dans les fentes de séparation (12) et qui, dans la position de fermeture des clapets, se coupent en intersection de telle façon que le clapet est immobilisé sur la partie surélevée du couvercle de bloc par l'arête recouvrante (14) de la plaque de recouvrement et n'est, pour l'ouverture, détachable du couvercle de bloc qu'avec une force soulevant le recouvrement.

## Fig. 1

## Fig. 2